# EUROPÄISCHE PATENTSCHRIFT

(11) **EP 1 627 994 B1**
(45) Veröffentlichungstag und Bekanntmachung des Hinweises auf die Patenterteilung: **12.04.2017**
(21) Anmeldenummer: 05105796.6
(22) Anmeldetag: 29.06.2005
(51) Int. Cl.: F01K 21/00

(54) **Verfahren und Vorrichtung zur Nutzung von Abwärme**
Method and apparatus for recovering waste heat
Méthode et appareil pour la récupération de chaleur perdue

(30) Priorität: 20.08.2004 DE 102004040730
(43) Veröffentlichungstag der Anmeldung: 22.02.2006
(73) Patentinhaber: Hildebrandt, Ralf Richard, 28259 Bremen (DE)
(72) Erfinder: Hildebrandt, Ralf Richard, 28259 Bremen (DE)
(74) Vertreter: Tappe, Udo

(56) Entgegenhaltungen:
- EP-A- 0 931 978
- WO-A-2005/031123
- US-A- 4 170 116
- US-A- 4 841 916
- US-A- 5 161 377

## Beschreibung

Die Erfindung betrifft ein Verfahren zur Nutzung von Abwärme aus einer Abwärmequelle in der Gestalt einer Verbrennungskraftmaschine indem ein Kühlmittel erwärmt und diese Wärme zum Antrieb einer Turbine genutzt wird. Des Weiteren betrifft die Erfindung eine Vorrichtung zur Durchführung eines solchen Verfahrens.

Eine solche Vorrichtung und ein solches Verfahren sind aus der US 2003/0005696 A1 bekannt. Das Kühlmittel, konkret Wasser, wird in einem Verbrennungsmotor von 71°C auf 79°C erwärmt und sodann mittels Düsen verdampft. Dabei wird das Kühlmittel in eine Verdampfungskammer, in welcher ein Unterdruck von 0,5 bar herrscht, eingeleitet. Aus dieser Verdampfungskammer wird der Dampf mittels einer Pumpe abgesaugt und in einem Abgaswärmetauscher nacherhitzt. Der so nacherhitzte Dampf wird zunächst in eine erste Turbine eingeleitet, welche die Pumpe antreibt und sodann erst der eigentlichen Arbeitsturbine zugeleitet.

Es wird also der zunächst erzeugte Dampf noch nachverdichtet und nacherhitzt. In der Verdampfungskammer 4 entsteht dabei offensichtlich Naßdampf, da sich der Dampf innerhalb dieser Verdampfungskammer gemeinsam mit dem aus dem Kondensator zurücklaufenden Kühlwasser befindet. Beim Nachverdichten des Naßdampfes durch die Pumpe besteht daher die Gefahr, daß der Dampf wieder auskondensiert. Darüber hinaus muß ein Dampf gefördert werden, was mit höheren Verlusten verbunden ist, da es sich bei Dampf im Gegensatz zu einer Flüssigkeit um ein kompressibles Medium handelt. Nicht nur deshalb wird ein großer Teil der beim Verdampfen des Kühlmittels freiwerdenden Expansionsenergie durch die Nachbehandlung des Dampfes wieder vernichtet.

Aus der US 4 841 916 A ist ein Wärmetauscher bekannt, der einen Vorwärmer zum Erhitzen einer Flüssigkeit hat, bevor die Flüssigkeit einem Verdampfer zugeführt wird. Hierbei werden Blasen innerhalb der zu kühlenden Vorrichtung erzeugt.

Gemäß der EP 0 931 978 A ist ein Verdampfer in Kombination mit einer Gasturbine als Abwärmequelle gezeigt, wobei die warmen Abgase der Gasturbine dem Verdampfer zugeführt werden. In dem Verdampfer wird Wasser als Wärmeträgermedium verwendet. Hierbei ist der Verdampfer mittels einer Leitung zwischen der Gasturbine und einer Dampfturbine angeordnet.

Die US 5 161 377 A zeigt einen Kreisprozess, bei dem Propan als Arbeitsmedium verwendet wird und die so genannte BLEVE-Reaktion genutzt wird. Hierbei wird ein flüssiges Gas zu einer explosionsartigen Ausdehnung gebracht.

Gemäß der WO 2004/044386 A2 wird das Kühlmittel aus beispielsweise einer Verbrennungskraftmaschine einem Wärmetauscher/Verdampfer zugeführt, in dem eine weitere Flüssigkeit erwärmt und dabei verdampft wird. Diese verdampfte Flüssigkeit wird auf eine Turbine geleitet und diese dadurch angetrieben. Die Turbine treibt ihrerseits einen Generator an. Wie bei Kreisprozessen üblich, wird der Dampf anschließend kondensiert und mittels einer Pumpe wieder dem Wärmetauscher/Verdampfer zugeleitet.

Nachteilig bei diesem Vorgehen ist, daß durch den zusätzlichen Wärmetauscher Wärmeverluste entstehen. Außerdem kann im Verdampfer die Flüssigkeit bzw. der Dampf nur auf eine Temperatur unterhalb der Temperatur des Kühlmittels erwärmt werden. Auch hierdurch ist der Wirkungsgrad herabgesetzt. Ferner besteht ein baulicher und ein Wartungs-Aufwand für ein zweites System.

Hiervon ausgehend liegt der Erfindung das Problem zugrunde, ein Verfahren und eine Vorrichtung der eingangs genannten Art derart weiterzubilden, daß der Wirkungsgrad erhöht ist sowie den baulichen und den Wartungs-Aufwand zu verringern.

Zur Lösung dieses Problems ist das erfindungsgemäße Verfahren dadurch gekennzeichnet, daß das Kühlmittel in der zu kühlenden Verbrennungskraftmaschine den Siedepunkt nicht überschreitet und flüssig bleibt, und daß das Kühlmittel nach dem Verdampfen unmittelbar der Turbine zugeleitet wird.

Erfindungsgemäß wird bei dem erfindungsgemäßen Verfahren und der erfindungsgemäßen Vorrichtung der erzeugte Dampf unmittelbar, das bedeutet ohne eine weitere Behandlung desselben, der Turbine zur Energieerzeugung zugeführt. Das Kühlmittel wird dabei zunächst in der Abwärmequelle erwärmt und sodann verdampft, indem es durch eine Düse auf einen Druck unterhalb des Dampfdruckes entspannt und/oder durch eine weitere (Ab-) Wärmequelle auf eine Temperatur oberhalb des Siedepunktes erwärmt wird. Dabei wird das Kühlmittel durch die Abwärme der Verbrennungskraftmaschine auf eine Temperatur erwärmt, die bei vorgegebenem Systemdruck in der zu kühlenden Verbrennungskraftmaschine, den Siedepunkt noch nicht überschreitet. Das Kühlmittel bleibt also flüssig und wird nicht verdampft. Erst am Eintritt in die Turbine wird durch eine geeignete Verdampfungseinrichtung das Kühlmittel verdampft und der Dampf zum Antrieb der Turbine genutzt. Der Erfindung liegt dabei die Erkenntnis zugrunde, daß zum einen der im Stand der Technik vorhandene Wärmetauscher als Verlustquelle eliminiert ist. Diese Maßnahme für sich genommen reicht aber nicht aus, da innerhalb beispielsweise einer Verbrennungskraftmaschine das Kühlmittel nicht verdampfen darf, weil sonst der Wärmeübergang von der Verbrennungskraftmaschine auf das Kühlmittel zusammenbricht und diese nicht mehr effektiv gekühlt werden kann und überhitzt. Das Kühlmittel verläßt die beispielsweise Verbrennungskraftmaschine also in flüssigem Zustand und wird erst nach Verlassen der Verbrennungskraftmaschine verdampft. Es bietet sich dabei an, das Kühlmittel als Flüssigkeit bis unmittelbar vor die Turbine zu fördern und erst am Eintritt zu verdampfen, da sich Flüssigkeit als inkompressibles Medium gut fördern läßt.

Als Verdampfer für das Kühlmittel eignet sich zum einen eine Düse, durch welche das Kühlmittel auf einen ausreichenden Druck, um für die Turbine ausreichend überhitzten Dampf zu erzeugen, entspannt wird. Zum anderen eignet sich als Verdampfer eine weitere Wärmequelle, welche eine weitere Abwärmequelle mit höherer Temperatur sein kann. Als Beispiel sei hier ein Abgaswärmetauscher zum Kühlen des Abgases oder ein Ladeluftkühler genannt.

Weitere Merkmale der Erfindung betreffen Ausgestaltungen des Verfahrens und der Vorrichtung und werden nachfolgend anhand von in der Zeichnung dargestellten Ausführungsbeispielen näher erläutert. Es zeigen:
- Fig. 1: ein erstes Ausführungsbeispiel einer Vorrichtung mit den Erfindungsmerkmalen in schematischer Darstellung,
- Fig. 2: ein zweites Ausführungsbeispiel einer Vorrichtung mit den Erfindungsmerkmalen in schematischer Darstellung,
- Fig. 3: ein drittes Ausführungsbeispiel einer Vorrichtung mit den Erfindungsmerkmalen in schematischer Darstellung,
- Fig. 4: ein viertes Ausführungsbeispiel einer Vorrichtung mit den Erfindungsmerkmalen in schematischer Darstellung,
- Fig. 5: ein weiteres Ausführungsbeispiel einer Vorrichtung mit den Erfindungsmerkmalen in schematischer Darstellung.

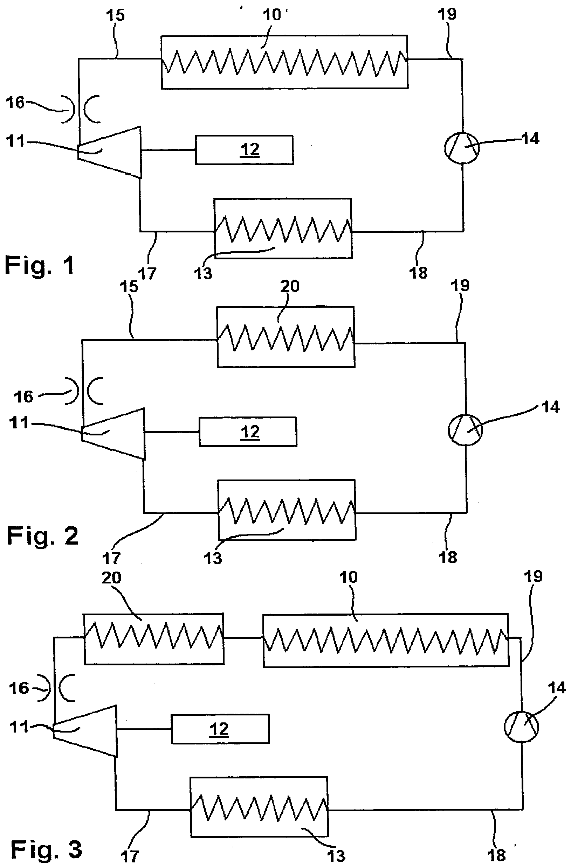

In den Fig. 1 bis 4 ist ein an den Rankine-Kreisprozeß angelehnter Prozeß gezeigt.

Die in Fig. 1 schematisch dargestellte Vorrichtung weist eine Abwärmequelle, nämlich eine Verbrennungskraftmaschine 10, eine Turbine 11, welche einen Generator 12 antreibt, einen Kondensator 13 und eine Pumpe 14 auf. In der Verbrennungskraftmaschine wird ein Kühlmittel zum Kühlen der Verbrennungskraftmaschine 10 erwärmt. Das Kühlmittel steht dabei unter einem erhöhten Druck von beispielsweise 4 bar und wird auf eine Temperatur von etwa 80 °C erwärmt. Dabei kommt es weniger auf die Werte für Druck und Temperatur an. Vielmehr ist sicherzustellen, daß das Kühlmittel in der Verbrennungskraftmaschine 10 bei vorgegebenem Systemdruck nicht über den Siedepunkt erwärmt wird, so daß das Kühlmittel nicht verdampft. Bei dem genannten Druck von 4 bar und der Temperatur von 80 °C eignet sich als Kühlmittel beispielsweise Dodecafluor-2methylpentan-3 (CF₃CF₂C(O)CF(CF₃)₂). Dieses Kühlmittel hat zudem den Vorteil, daß es feuerbeständig ist.

Das so durch die Abwärme der Verbrennungskraftmaschine 10 erwärmte Kühlmittel wird in flüssigem, also noch nicht gasförmigem, Zustand mittels der Kühlmittelleitung 15 zugeleitet. Unmittelbar vor Eintritt des Kühlmittels in die Turbine 11 ist am Übergang der Kühlmittelleitung 15 zur Turbine 11 eine Düse 16 vorgesehen, durch welche das Kühlmittel unter Dampfdruck entspannt wird. Hierdurch verdampft das Kühlmittel und wird in gasförmiger Form in den Arbeitsbereich der Turbine 11 eingeleitet. Dabei wird in der Düse 16 das Kühlmittel soweit entspannt, daß ein für den Betrieb der Turbine 11 hinreichend überhitzter Dampf entsteht.

Nach dem Verlassen der Turbine 11 wird der Dampf, der jetzt bereits als Nassdampf vorliegen kann, über eine Kühlmittelleitung 17 dem Kondensator 13 zugeleitet und hier kondensiert. Von dort gelangt das Kühlmittel über eine Leitung 18 zur Pumpe 14, wo es wieder auf den für den Eintritt in die Verbrennungskraftmaschine 10 erforderlichen Systemdruck verdichtet wird. Von der Pumpe 14 gelangt das Kühlmittel über eine Leitung 19 zur Verbrennungskraftmaschine 10.

Die Vorrichtung gemäß Fig. 2 ist analog zur Vorrichtung gemäß Fig. 1 ausgebildet. Sie unterscheidet sich lediglich in der Abwärmequelle. Bei dem Ausführungsbeispiel gemäß Fig. 2 wird als Abwärmequelle ein Abgaskühler einer Verbrennungskraftmaschine eingesetzt. Entsprechend der gegenüber der Kühlmitteltemperatur höheren Abgastemperatur von etwa 250° Celsius läßt sich hier eine höhere Kühlmitteltemperatur erreichen, so daß, abhängig vom Siedepunkt des Kühlmittels, ein höherer Dampfdruck vorliegt und damit auch mit einem höheren Systemdruck im Abgaswärmetauscher 20 gearbeitet werden kann.

Fig. 3 zeigt eine Variante, bei der zwei Wärmequellen, nämlich eine Verbrennungskraftmaschine 10 und ein Abgaswärmetauscher 20, vorgesehen sind. Durch die Verbrennungskraftmaschine 10 wird das Kühlmittel zunächst auf 80° und sodann durch den Abgaswärmetauscher 20 auf etwa 250 °C erwärmt. Das Kühlmittel verläßt auch in diesem Fall den Abgaswärmetauscher 20 in flüssiger, also nicht gasförmiger Form und wird erst in der Düse 16 zu überhitztem Dampf entspannt.

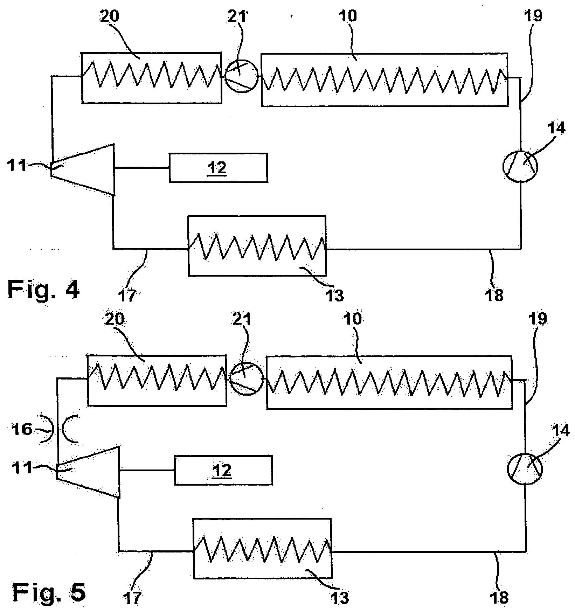

Anders als bei Verbrennungskraftmaschinen 10 ist die Einhaltung einer bestimmten Betriebstemperatur im Abgaswärmetauscher 20 nicht unbedingt erforderlich, so daß es ohne Sicherheitsrisiko bzw. Risiko für die Betriebssicherheit durchaus möglich ist, das Kühlmittel auch bereits im Abgaswärmetauscher 20 zu verdampfen. Ein solcher Fall ist in Fig. 4 gezeigt. Bei diesem Ausführungsbeispiel entfallt die Düse 16 und der überhitzte Dampf wird im Abgaswärmetauscher 20 erzeugt. Der Abgaswärmetauscher ist in diesem Fall also die Verdampfungseinrichtung. Zwischen die Verbrennungskraftmaschine 10 und den Abgaswärmetauscher 20 ist ferner eine weitere Pumpe 21 zum erhöhen des Systemdrucks für den Abgaswärmetauscher 20 vorgesehen. Berechnungen zu dieser Variante gemäß Fig. 4 haben gezeigt, daß sich der Wirkungsgrad von Großdieselaggregaten um bis zu 5 %, also von etwa 40 % auf 45 %, steigern läßt.

Wird die Pumpe 21 nicht verwendet, ist der Gewinn an Wirkungsgrad, trotz des zusätzlichen Aufwandes für die Pumpe 21 bei dem Ausführungsbeispiel gemäß Fig. 4, nicht so hoch. Dennoch ist selbstverständlich auch diese Variante möglich.

Ausgehend von dem Ausführungsbeispiel gemäß Fig. 4 ist es auch möglich, das Kühlmittel erst in einer zusätzlichen Düse 16 analog zum Ausführungsbeispiel gemäß Fig. 3 zu überhitztem Dampf zu entspannen oder im Abgaswärmetauscher 20 Naßdampf bzw. überhitzten Dampf zu erzeugen, welcher dann in der Düse 16 weiter zu überhitztem Dampf bzw. noch stärker überhitztem Dampf entspannt wird (Fig. 5)

Zusätzlich oder alternativ kann zu dem in Fig. 2 bis 4 gezeigten Abgaswärmetauscher 20 auch ein Ladeluftkühler verwendet werden.

### Bezugszeichenliste :

- 10: Verbrennungskraftmaschine
- 11: Turbine
- 12: Generator
- 13: Kondensator
- 14: Pumpe
- 15: Kühlmittelleitung
- 16: Düse
- 17: Kühlmittelleitung
- 18: Kühlmittelleitung
- 19: Kühlmittelleitung
- 20: Abgaswärmetauscher
- 21: Pumpe

## Patentansprüche

1. Verfahren zur Nutzung von Abwärme aus einer Abwärmequelle (10) in der Gestalt einer Verbrennungskraftmaschine indem ein Kühlmittel durch die Abwärmequelle (10) bei einem vorgegebenen Druck auf eine erste Temperatur unterhalb des Siedepunktes des Kühlmittels bei diesem Druck erwärmt wird, sodann nach dem Verlassen der Abwärmequelle (10) durch Erwärmen des Kühlmittels auf eine zweite Temperatur über dem Siedepunkt und/oder durch Expandieren des Kühlmittels unter den Dampfdruck verdampft und anschließend einer Turbine (11) zugeleitet wird,
**dadurch gekennzeichnet, daß** das Kühlmittel in der zu kühlenden Verbrennungskraftmaschine den Siedepunkt nicht überschreitet und flüssig bleibt, und dass das Kühlmittel nach dem Verdampfen unmittelbar der Turbine (11) zugeleitet wird.

2. Verfahren nach Anspruch 1, **dadurch gekennzeichnet, daß** das Kühlmittel nach dem Erwärmen in der Abwärmequelle (10) als Flüssigkeit der Turbine (11) zugeleitet und erst am Eintritt in die Turbine (11) verdampft wird.

3. Verfahren nach Anspruch 1 oder 2, **dadurch gekennzeichnet, daß** beim Verdampfen des Kühlmittels überhitzter Dampf erzeugt wird.

4. Verfahren nach einem der Ansprüche 1 bis 3, **dadurch gekennzeichnet, daß** das Kühlmittel in der Abwärmequelle (10) bei einem Druck von 4 bar auf eine Temperatur von mindestens 80°C, insbesondere bis 250°C, erwärmt wird.

5. Verfahren nach Anspruch 4, **dadurch gekennzeichnet, daß** das Kühlmittel in der Abwärmequelle (10) auf eine Temperatur von 80°C und in einer weiteren Wärmequelle (20) auf eine höhere Temperatur, insbesondere 250°C, erwärmt und gegebenenfalls verdampft wird.

6. Verfahren nach Anspruch 5, **dadurch gekennzeichnet, daß** das Kühlmittel nach dem Verlassen der Abwärmequelle (10) auf einen erhöhten Druck komprimiert und mit diesem höheren Druck in der weiteren Wärmequelle (20) verdampft wird.

7. Vorrichtung zur Nutzung von Abwärme mit einer durch ein Kühlmittel gekühlten Abwärmequelle (10) in der Gestalt einer Verbrennungskraftmaschine, in welcher das Kühlmittel durch die Abwärmequelle (10) bei einem vorgegebenen Druck auf eine erste Temperatur unterhalb des Siedepunktes des Kühlmittels bei diesem Druck erwärmt wird, einer Verdampfungseinrichtung (16), in welcher das Kühlmittel durch Erwärmen des Kühlmittels auf eine zweite Temperatur über dem Siedepunkt und/oder durch Expandieren des Kühlmittels unter den Dampfdruck verdampft, und einer Turbine (11), **dadurch gekennzeichnet, daß** die Vorrichtung derart ausgelegt ist, daß das Kühlmittel in der zu kühlenden Verbrennungskraftmaschine den Siedepunkt nicht überschreitet und flüssig bleibt, und dass die Verdampfungseinrichtung (16) in Strömungsrichtung des Kühlmittels gesehen unmittelbar vor der Turbine (11) vorgesehen ist.

8. Vorrichtung nach Anspruch 7, **dadurch gekennzeichnet, daß** die Verdampfungseinrichtung (16) unmittelbar am Eintritt in die Turbine (11) vorgesehen ist.

9. Vorrichtung nach Anspruch 7 oder 8, **dadurch gekennzeichnet, daß** zwischen einer ersten Abwärmequelle (10 und einer weiteren (Ab-)Wärmequelle eine Pumpe (21) vorgesehen ist.

## Claims

1. Process for recovering waste heat from a waste heat source (10) in the form of an internal combustion engine, in which a coolant is heated by the waste heat source (10) at a pre-set pressure to a first temperature below the boiling point of the coolant at this pressure, subsequently, after leaving the waste heat source (10), the coolant is evaporated by heating the coolant to a second temperature above the boiling point and/or by expanding the coolant below the vapour pressure and then fed directly to a turbine (11),
**characterised in that** the coolant in the internal combustion engine being cooled does not exceed the boiling point and remains liquid, and that the coolant after evaporation is fed directly to the turbine (11).

2. Process according to claim 1, **characterised in that** the coolant after the heating in the waste heat source (10) is fed as a liquid to the turbine (11) and is evaporated only on entering into the turbine (11).

3. Process according to claim 1 or 2, **characterised in that** superheated steam is generated when the coolant is evaporated.

4. Process according to one of claims 1 to 3, **characterised in that** the coolant is heated in the waste heat source (10) at a pressure of 4 bar to a temperature of at least 80 °C, in particular up to 250 °C.

5. Process according to claim 4, **characterised in that** the coolant in the waste heat source (10) is heated to a temperature of 80 °C and in another heat source (20) heated to a higher temperature, in particular 250 °C, and optionally evaporated.

6. Process according to claim 5, **characterised in that** the coolant, after leaving the waste heat source (10) is compressed to an increased pressure and with this higher pressure is evaporated in the additional heat source (20).

7. Device for recovering waste heat with a waste heat source (10) in the form of an internal combustion engine cooled by a coolant, in which the coolant is heated by the waste heat source (10) at a pre-set pressure to a first temperature below the boiling point of the coolant at this pressure, with an evaporation unit (16), in which the coolant is evaporated by heating the coolant to a second temperature above the boiling point and/or by expanding the coolant below the vapour pressure, and with a turbine (11), **characterised in that** the device is designed in such a way that the coolant in the internal combustion engine being cooled does not exceed the boiling point and remains liquid, and that the evaporation unit (16) is provided directly upstream of the turbine (11).

8. Device according to claim 7, **characterised in that** the evaporation unit (16) is provided directly at the inlet into the turbine (11).

9. Device according to claim 7 or 8, **characterised in that** a pump (21) is provided between a first waste heat source (10) and an additional (waste) heat source.

## Revendications

1. Procédé permettant d'utiliser la chaleur perdue d'une source de chaleur perdue (10) sous la forme d'une machine à combustion interne, dans lequel un fluide de refroidissement est, sous l'effet de la source de chaleur perdue (10), chauffé à une pression prédéfinie à une première température, inférieure au point d'ébullition du fluide de refroidissement avec cette pression, puis, après avoir quitté la source de chaleur perdue (10), est évaporé par chauffage du fluide de refroidissement à une deuxième température supérieure au point d'ébullition, et/ou par dilatation du fluide de refroidissement sous la pression de la vapeur, puis est envoyé à une turbine (11), **caractérisé en ce que** le fluide de refroidissement ne dépasse pas le point d'ébullition dans la machine à combustion interne à refroidir et reste liquide, et **en ce que** le fluide de refroidissement est, après l'évaporation, immédiatement envoyé à la turbine (11).

2. Procédé selon la revendication 1, **caractérisé en ce que** le fluide de refroidissement est, après le chauffage dans la source de chaleur perdue (10), envoyé à la turbine (11) sous forme liquide, et n'est évaporé qu'à l'entrée de la turbine (11).

3. Procédé selon la revendication 1 ou 2, **caractérisé en ce que** de la vapeur surchauffée est produite lors de l'évaporation du fluide de refroidissement.

4. Procédé selon l'une des revendications 1 à 3, **caractérisé en ce que** le fluide de refroidissement est, dans la source de chaleur perdue (10), chauffé à une pression de 4 bar à une température d'au moins 80°C, en particulier allant jusqu'à 250°C.

5. Procédé selon la revendication 4, **caractérisé en ce que** le fluide de refroidissement est, dans la source de chaleur perdue (10), chauffé à une température de 80°C et, dans une source de chaleur supplémentaire (20), à une température plus élevée, en particulier de 250°C, et est éventuellement évaporé.

6. Procédé selon la revendication 5, **caractérisé en ce que** le fluide de refroidissement est, après avoir quitté la source de chaleur perdue (10), comprimé à une pression plus élevée, et évaporé à cette pression plus élevée dans la source de chaleur supplémentaire (20).

7. Dispositif pour utiliser la chaleur perdue à l'aide d'une source de chaleur perdue (10) refroidie par un fluide de refroidissement, sous forme d'une machine à combustion interne, dans lequel le fluide de refroidissement est, sous l'effet de la source de chaleur perdue (10), chauffé à une pression prédéfinie à une première température inférieure au point d'ébullition du fluide de refroidissement avec cette pression, d'un dispositif d'évaporation (16) dans lequel le fluide de refroidissement est évaporé par chauffage du fluide de refroidissement à une deuxième température supérieure au point d'ébullition et/ou par dilatation du fluide de refroidissement sous la pression de la vapeur, et d'une turbine (11), **caractérisé en ce que** le dispositif est configuré de telle sorte que le fluide de refroidissement ne dépasse pas, dans la machine à combustion interne à refroidir, le point d'ébullition et reste liquide, et **en ce que** le dispositif d'évaporation (16) est prévu immédiatement en avant de la turbine (11) quand on regarde dans le sens d'écoulement du fluide de refroidissement.

8. Dispositif selon la revendication 7, **caractérisé en ce que** le dispositif de refroidissement (16) est prévu immédiatement à l'entrée de la turbine (11).

9. Dispositif selon la revendication 7 ou 8, **caractérisé en ce qu'**une pompe (21) est prévue entre une première source de chaleur perdue (10) et une source de chaleur (perdue) supplémentaire.
